# EUROPEAN PATENT APPLICATION

(11) **EP 2 826 586 A1**
(43) Date of publication of application: **21.01.2015**
(21) Application number: 13176954.9
(22) Date of filing: 18.07.2013
(51) Int. Cl.: B23K 26/03, B23K 26/38

(54) **A method and a system for machining an object**

(71) Applicant: Siemens Aktiengesellschaft, 80333 München (DE)
(72) Inventor: Dietrich, Jens, 14612 Falkensee (DE); Flores Renteria, Arturo, 10715 Berlin (DE); Münzer, Jan, 10439 Berlin (DE); Thomaidis, Dimitrios, 14197 Berlin (DE)

(57) **Abstract**

The invention relates to laser machining, especially laser drilling, of an object. The object is an airfoil for a blade or a vane of a turbo machine and an outer wall of the airfoil is a workpiece which has to be drilled using a laser drilling system. During drilling, the laser removes material from the workpiece. The drilling process is monitored with the help of a spectrometer by conducting a spectral analysis of the removed material. Upon breakthrough of the laser beam through the workpiece, the laser falls on a filling material which is located in the airfoil between the workpiece and a neighboring further section of the airfoil which must not be damaged by the laser. The laser will remove material also from the filling. The presence of removed filling material can be detected by the spectrometer and subsequently the drilling process can be stopped.

## Description

The present invention relates to the field of machining of a workpiece. In particular, the invention lies in the field of laser machining of a turbine component for manufacture of such a component. For example, the machining can be in the form of laser drilling, laser cutting, or other machining processes based on the use of a laser.

Turbine components like blades or vanes often comprise sophisticated attributes which are complicated to manufacture. For example, cooling channels or holes for guiding cooling fluids like air are critical parts of such components. For the manufacture of these, the components have to be cut or drilled etc., which might induce damages to the component and/or to the component's coating, if applicable. One method for the necessary machining of the component is the laser machining approach.

Laser machining is based on the phenomenon of material ablation effected by a laser. The laser heats up the targeted material of an object, such that a physical/chemical phase change of the material is induced, resulting in a removal of the material from the object. Herein, the wavelength and the intensity of the laser beam as well as the material composition determine the efficiency of the machining process. Typically, the wavelengths range between infrared or microwave up to ultraviolet. Therein, pulsed or continuous laser beams are used for laser machining.

In case the laser beam breaks through the workpiece to be machined, e.g. in case of laser drilling or laser cutting of a particular wall of the component, serious damaging of material or layers of the component which are located behind said wall would occur. Therefore, such a breakthrough of the laser beam through the wall and the workpiece, respectively, has to be determined during the machining process to avoid unwanted damages of the component.

For example, a breakthrough can be detected by an optical sensor which has to be placed behind the workpiece to be machined. Upon breakthrough, the laser light reaches the optical sensor which in turn generates a corresponding signal to initiate adequate measures like stopping the laser beam or re-directing the laser beam to continue the machining at another location. However, this approach necessitates the placing of a sensor at a location which might be difficult to access. Also, for example in case of drilling a hole, the sensor would have to be placed at a new location to control the next machining step. After the machining, the sensor would have to be removed again. Overall, the use of an optical sensor for this purpose is an elaborate approach.

Therefore, it is an object of the present invention to propose a system and a method for controlling laser machining of a workpiece.

This object is achieved by a system according to claim 1, and a method according to claim 10.

This aspect of the invention is based on the approach to use a spectrometer during the laser machining of the workpiece to monitor the material which is removed from the workpiece by the laser. As long as the machining of the workpiece is ongoing and a breakthrough has not yet occured, the spectrometer will detect a spectrum corresponding to the material of the workpiece, e.g. a metal or a coating material. Upon breakthrough, the spectrum will change since the material which is penetrated by the laser changes. Especially, according to the invention, a special material with a well known spectrum, e.g. Teflon or wax, is placed behind the workpiece. As soon as the known spectrum is detected, the machining can be stopped or the laser beam can be re-directed to another region on the workpiece to continue machining there.

Correspondingly, a control system according to an aspect of the invention for a laser machining system for machining of a workpiece comprises:
- a spectrometer unit for determining a spectrum of light emitted during operation of the laser machining system by a material removed from a region of the workpiece by a laser beam of a laser source of the laser machining system, wherein the light uniquely characterizes the removed material,
- an analysis unit for conducting a spectral analysis of the spectrum of the emitted light to enable identification of the removed material, wherein the analysis unit is in data connection with the spectrometer unit and wherein the analysis unit is configured to generate an output signal uniquely depending on the spectral analysis,
- a control unit for controlling the laser source by setting the operational parameter of the laser source, wherein the control unit is in data connection with the analysis unit and wherein the operational parameter determines the laser beam properties, wherein the control unit is configured to set the operational parameter based on the output signal of the analysis unit, and therewith based on the removed material, wherein
- the analysis unit is moreover configured to generate the output signal such that the output signal triggers the control unit to stop the machining of the workpiece upon detection of a predefined change of removed material.

This control system allows to control the laser source such that a dynamical machining of the workpiece becomes possible. Depending on the removed material, optimal operational parameters of the laser can be selected and each layer of the workpiece and their interfaces can be drilled by using adequate laser parameters to obtain best cost / quality relation. Especially, as soon as a predefined change of machined material is detected, the laser source can be switched off, so that a damage of a material which is located behind the workpiece and which must not be damaged, can be avoided. Therein, the predefined change can be a change from one specific material to any other material or a change from any material to a specific material or a change from a first specific material to a second specific material.

Advantageously, the ability to precisely monitor for breakthrough provides the important advantage of reducing unnecessary laser pulses, which otherwise could reduce manufacturing efficiency and/or increase thermal or mechanical damage to the component material.

According to an embodiment, the analysis unit is configured to generate the output signal such that the output signal triggers the control unit to stop the machining of the workpiece upon identification of the removed material to be a predefined material, i.e. as soon as the analysis unit identifies the removed material to be a predefined material. Here, the predefined change is a change from any material to a specific material. This allows a fast reaction of the control unit and a high accuracy of detection since the predefined material and its spectrum are known so that the identification is unambiguous.

Therein, the predefined material is a filling material to be arranged behind the workpiece in a direction of propagation of the laser beam. To be more precise, the workpiece is a section of an object, the object comprising at least the workpiece and a further section, which must not be damaged. The further section is located in the direction of propagation of the laser beam behind the workpiece and the predefined material is a filling material located between the workpiece and the further section. The use of a filling material in this scenario has the advantage that if can absorb the laser beam and the damaging of the further section is avoided. For example, the filling material is Teflon or wax.

In an alternative embodiment, the workpiece comprises at least one layer of a known material and a known spectrum, wherein the one layer is the last layer of the workpiece in a direction of propagation of the laser beam. The predefined change of removed material is the change from the material of the last layer of the workpiece to any other material. The other material might be the above mentioned filling material, air, or any other material. This gives the advantage that it becomes possible to detect the last layer to be machined, so that the stopping of the machining process can be prepared early.

Here, the predefined changed is considered to be detected upon a significant decrease of intensity of the known spectrum emitted by the known material of the last layer. The decrease is considered to be significant when the spectrometer unit and the analysis unit can unambiguously determine that the emitted light is not originating from the known material.

According to another embodiment, the laser source is configured to generate a pulsed laser beam comprising a series of laser pulses and beam pauses between subsequent laser pulses. Now, the control system is configured to conduct the spectral analysis only during beam pauses between laser pulses of the laser beam. Therewith, it can be excluded that reflections of the laser beam at the workpiece disturb the analysis of light emitted by the removed material. Thus, a higher accuracy can be achieved.

Therein, the control system can be configured to conduct the spectral analysis only during every n-th beam pause, with n#1. With this, the requirements to the electronic equipment of the laser machining system would be less challenging since the analysis and the processing can be slower.

A laser machining system for machining a workpiece comprises:
- a control system as described above and
- a laser source for generating the laser beam to be incident on the region of the workpiece, such that the laser beam machines the workpiece in the region by removing the material from the region, therewith creating a hole or a cut, wherein the laser beam comprises laser beam properties according to at least one operational parameter of the laser source, for example wavelength, intensity, diameter, and -in case the laser beam is a pulsed laser beam- temporal information about the laser pulses and beam pauses between the pulses.

A method according to the invention for controlling machining of a workpiece with a laser machining system, wherein the laser machining system comprises a laser source for generating a laser beam to be incident on a region of the workpiece, such that the laser beam machines the workpiece in the region by removing a material from the region, comprises the following steps:
- A step of determining a spectrum of light emitted from the removed material from the region of the workpiece by a spectrometer unit. The light characterizes the removed material.
- A step of providing the determined spectrum from the spectrometer unit to an analysis unit.
- A step of conducting a spectral analysis of the spectrum of the emitted light by the analysis unit to enable identification of the removed material.
- A step of generating an output signal uniquely depending on the spectral analysis by the analysis unit.
- A step of providing the output signal, being a unique identifier of the removed material, to a control unit for controlling the laser source based on the output signal of the analysis unit.
Therein, upon detection of a predefined change of the removed material, the output signal is generated such that it triggers the control unit to stop the machining of the workpiece.

In case the laser beam is a pulsed laser beam consisting of a series of laser pulses and pauses between two pulses, the removed material is only analyzed during pauses in between the laser pulses.

According to one embodiment of the method, the output signal is generated such that it triggers the control unit to stop the machining of the workpiece upon identification of the removed material to be a predefined material, i.e. as soon as the analysis unit identifies the removed material to be a predefined material.

Therein, the predefined material is a filling material to be arranged behind the workpiece in a direction of propagation of the laser beam. To be more precise, the workpiece is a section of an object, the object comprising at least the workpiece and a further section, wherein the further section is located in the direction of propagation of the laser beam behind the workpiece and wherein the predefined material is a filling material located between the workpiece and the further section. The predefined change of the removed material is the change to the filling material, but not to any other material.

In an alternative embodiment of the method, the workpiece comprises at least one layer of a known material and a known spectrum, wherein the one layer is the last layer of the workpiece in a direction of propagation of the laser beam, and wherein the predefined change of removed material is the change from the material of the last layer of the workpiece to any other material. It might be noted that the workpiece might comprise a plurality of layers including the last layer, wherein the last layer as defined above is that layer of the plurality which is the last one in the direction of propagation of the laser beam. I.e. the last layer would be machined last.

It might be mentioned, that the machining of the workpiece can be a drilling process to generate a hole in the workpiece, wherein the region comprises the hole and wherein the removed material is the material which has been removed from the workpiece to generate the hole.

Moreover, it might be noted that the system might comprise a dichroic element, e.g. a mirror. The dichroic element and the laser source are arranged such that the laser beam emitted from the laser source during operation is reflected to the region. There, the laser beam machines the workpiece as described above to create a hole or a cut. Moreover, the dichroic element is arranged in the optical path between the workpiece and the region, respectively, and the spectrometer unit. Thus, the light emitted by the removed material passes the dichroic element before it reaches the spectrometer unit for further analysis and processing by means of the spectrometer unit, the analysis unit, and the control unit.

This allows an optimal arrangement of the laser source, the spectrometer unit, and the workpiece so that maximum light from the removed material would be detectable by the spectrometer unit. Also, the spectrometer unit would not receive laser light reflected from the workpiece.

Moreover, the damaging of the walls located behind the drilled regions is avoided by using a wax or Teflon clump in between.

Besides the above addressed problem of precise breakthrough detection, laser machining may also result in damaging the workpiece. Two well known approaches of laser machining are percussion laser machining and trepan laser machining. However, laser machining of a component induces defects on the material regions surrounding the machined areas of the component. For example, in case of a coated component of a turbine like a blade or a vane, cracks may occur at the coating and at the base material as well as at melting layers at the walls of the component.

The defects induced in the surroundings of the machined regions are diminished by changing from percussion to trepan laser machining. This approach induces lower levels of defects. However, it requires longer processing time. Another alternative is to select soft percussion parameters, but this also results in longer processing times.

Therefore, it is a side object of the present invention to propose a system and a method for less destructive laser machining of a workpiece.

The aforementioned object is achieved by a system according to claim 15.

The side aspect of the invention is based on the approach to adapt the parameters of a pulsed laser beam for laser machining to the material of the workpiece which has to be machined. The use of a spectrometer during the laser machining of the workpiece allows setting up a dynamical machining. The material been machined can be accurately identified by this method via the spectrum signal. This would allow selecting appropriate laser parameters that induce lower damaging levels on every single component of the workpiece. Especially, the determination of the spectrum signal and of the material being machined, respectively, only during pauses between laser pulses of the laser beam allows an accurate determination of the material since disturbances and/or interferences with reflections of the laser beam can be excluded. Thus, the laser beam parameters can be selected even more appropriate to achieve optimal adaption to the material to be removed from the workpiece.

Correspondingly, a control system for a laser machining system for machining of a workpiece according to the side aspect of the invention, comprises:
- a spectrometer unit for determining a spectrum of light emitted during operation of the laser machining system by a material removed from a region of the workpiece by a pulsed laser beam of a laser source of the laser machining system, wherein the light characterizes the removed material,

- an analysis unit for conducting a spectral analysis of the spectrum of the emitted light to enable identification of the removed material, wherein the analysis unit is in data connection with the spectrometer unit and wherein the analysis unit is configured to generate an output signal uniquely depending on the spectral analysis,
- a control unit for controlling the laser source by setting the operational parameter of the laser source, wherein the control unit is in data connection with the analysis unit and wherein the operational parameter determines the laser beam properties, wherein the control unit is configured to set the operational parameter based on the output signal of the analysis unit and therewith based on the removed material, wherein
- the control system is configured to conduct the spectral analysis only during pauses between laser pulses of the pulsed laser beam.

Besides the above mentioned advantages, it can now be excluded that reflections of the laser beam at the workpiece disturb the analysis of light emitted by the removed material. Thus, a higher accuracy can be achieved.

Also, in this side aspect of the invention, the stopping of the machining of the workpiece can be achieved as described above or, to be more exact, as described in claims 1 to 14.

The present invention is further described hereinafter with reference to illustrated embodiments shown in the accompanying drawings, in which:
- FIG 1: illustrates a first embodiment of laser machining system,
- FIG 2: illustrates a second embodiment of laser machining system.

Various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

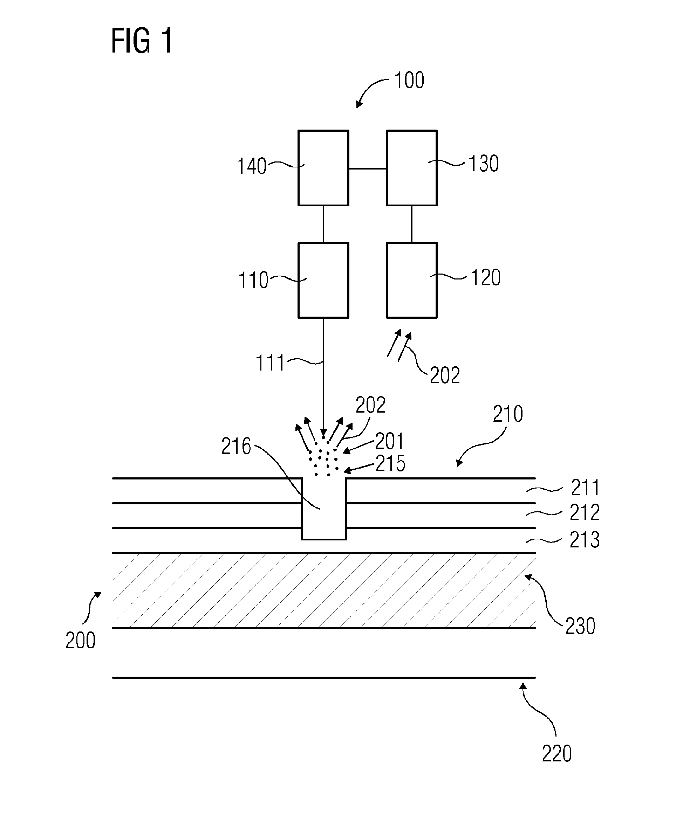

FIG 1 illustrates a laser machining system 100 for machining of an object 200. A section of the object 200 is shown in a cross-sectional view.

The laser machining system 100 comprises a laser source 110, a spectrometer unit 120, an analysis unit 130, and a control unit 140. The analysis unit 130 is in data connection both with the spectrometer unit 120 and with the control unit 140. The control unit 140 is also in data connection with the laser source 110. It might be mentioned that the analysis unit 130 might be an integral part of the spectrometer unit 120.

During operation of the laser machining system 100, the laser source 110 generates a laser beam 111 to be incident on a region 215 of the object 200. For example, the laser can be a Nd:YAG laser with typical parameters of 10-30J and 10-20kW. The laser beam 111 machines the object 200 in the region 215 based on the effect of material ablation by removing material 201 from the region 215, therewith creating a hole 216 or a cut (not shown). Herein, the removed material 201 is identical to the machined material of the object 200.

The spectrometer unit 120 determines a spectrum S of light 202 which is emitted from the region 215 of the object 200 by the removed material 201. The light 202 and its spectrum S, respectively, is a unique identifier of the removed material 201 and the machined material, respectively, such that the determination and analysis of the spectrum S allows the precise identification of the removed material 201. Since the removed material 201 emitting the light 202 is that material which has just been removed by the laser beam 111, the identification of this material allows to conclude which material is currently machined by the laser beam 111. In case the object 200 consists of different materials, e.g. arranged in several layers, this approach allows to determine at which position in the object 200 the laser beam 11 is currently performing the machining process.

The spectrometer unit 120 provides the spectrum S to the analysis unit 130 which conducts a spectral analysis of the spectrum S of the emitted light 202. The spectral analysis allows the identification of the removed material 201. Since methods for identifying a material with the help of spectral analysis are well known, the methods applied in the analysis unit 130 will not be explained in detail for the sake of brevity. It may be noted that a standard method can be applied in which, for example, the actual positions of peaks of the determined spectrum are compared with the positions of peaks of well known reference spectra. In case the peak positions are identical, the removed material can be identified to be identical to the material of the refererence spectrum. However, other methods of evaluation can also be applied.

The analysis unit 130 is further configured to generate an output signal depending on the result of the spectral analysis, i.e. depending on the identity of removed material 201. Therefore, the output signal is also a unique identifier of the removed material 201. The output signal is sent to the control unit 140, which in turn controls the laser source 110 by setting operational parameters of the laser source 110 responsive to the output signal. The operational parameters determine the properties of the laser beam 111, like beam intensity and/or beam diameter. In the end, the operational parameters depend on the spectrum S of light 202 emitted by the removed material 201.

Controlling the beam intensity would include complete deactivation of the laser beam 111, resulting in a stop of the machining of the object 200. For example, it might be beneficial to stop the machining upon identification of a certain, predefined material. Moreover, in case of a pulsed laser beam 111, the duration of the pulses as well as the duration of the pauses between succeeding pulses can be controlled.

The object 200 to be machined by the laser machining system 100 is a coated airfoil for a blade or a vane of a turbomachine. The airfoil 200 comprises a first wall 210, which can be an outer wall 210 of the airfoil 200, and a second wall 220, which can be an interior wall or an opposing outer wall of the airfoil 200. A hollow space 230 is located between the first wall 210 and the second wall 220 of the airfoil 200. During operation of the airfoil 200 in a turbomachine, the hollow space 230 might be used to guide a cooling medium for cooling the airfoil 200.

The first wall 210 of the airfoil comprises several layers 211-213. The outer layer 211 is a thermal barrier coating (TBC), followed by a bond coat 212 and a base material 213. The second wall 220 may have a similar structure. The first, outer wall 210 is a workpiece 210 to be machined by the laser machining system 100. The second wall 220 should not be damaged.

In the given example, the machining would be a drilling process to generate a hole 216 in a region 215 of the outer wall 210. For this, the airfoil 200 and the laser source 110 are arranged such that the outer wall 210 is facing the laser source 110. Thus, during operation of the laser machining system 100 the laser beam 111 is incident on the region 215 to drill the hole 216. In the beginning of the machining process, the laser beam 111 would machine the outer layer 111. Thus, the machined material is the material of the outer layer 111, so that the removed material 201 is also the material of the outer layer 111. As mentioned earlier, the machined material and the removed material are identical. At a later stage of the machining process, the hole 216 has been drilled so far that the laser beam 111 is machining the next layer in the direction of beam propagation, namely the bond coat layer 212. The same is applicable for subsequent layers.

Finally, after having machined all layers 211-213 of the first wall 210, the hole 216 would reach through the entire first wall 210 and a breakthrough would occur. Immediately, the laser beam 111 would fall onto the second wall 220, resulting in a damage of the second wall. To avoid this, the hollow space 230 is filled with a filling material 231 for the purpose of machining the airfoil 200. The filling material 231 is suitable to absorb the laser beam 111 upon breakthrough of the laser beam 111 through the first wall 210. With this, it can be avoided that the laser beam 111 damages the second wall 220. For example, the filling material 231 can be Teflon or wax.

FIG 1 shows a situation in which the hole 216 is not yet completed, i.e. a breakthrough through the first wall 210 has not yet occurred. Actually, in the shown situation the laser beam 111 has machined the workpiece 210 and the first wall 210, respectively, so far that the removed material 201 is currently from the base material layer 213. I.e. at an earlier stage the analysis unit 130 of the laser machining system 100 has identified the removed material 201 and therewith the machined material to be the material of the outer layer 211, i.e. TBC. As soon as the machining has evolved so far that the laser beam 111 has proceeded to the next layer, i.e. to the bond coat layer 212, the analysis unit 130 has identified the removed material 201 to be the material of that layer 212. In the current situation as shown in FIG 1, the removed material 201 would be identified to be the material of the layer 213 of base material.

After breakthrough of the laser beam 211 through the first wall 210, the beam 211 would fall onto the filling material 231. Therefore, filling material 231 would be removed, so that the spectrometer unit 120 detects a corresponding spectrum and the analysis unit 130 identifies the removed material 201 to be the filling material 231.

In general, the analysis unit 130 sends different output signals to the control unit 140 corresponding to the identification of different materials for the different layers. The control unit 140 controls the laser source 110 by setting operational parameters of the laser source 110 responsive to the output signal of the analysis unit 130. Thus, different operational parameters can be set for different materials to be machined by the laser beam 111.

For example, a certain intensity of the laser beam 111 might lead to significant damages of a certain material. Moreover, a certain intensity might be the most effective machining intensity for a certain material. Since these material properties are known, it is possible to select optimal operational parameters of the laser source 110 for a given material. Since the current output signal of the analysis unit 130 is a unique identifier of the currently removed material 201, the optimal operational parameters can be selected. As soon as a change of removed material 201 is detected, the operational parameters are changed correspondingly.

The laser machining system 100 comprises a data base which provides a list of optimal operational parameters for different predefined materials and output signals, respectively. In case the removed material 201 is identified to be a predefined material, the operational parameters for the laser source 110 can be selected as defined for that predefined material in the data base. For example, the data base can be stored in the laser source 110.

One aspect of the invention focuses on the breakthrough situation. The machining of the workpiece 210 is stopped upon detection of a predefined change of removed material 201. I.e. as soon as a change of removed material from a certain first type to a certain second type of material is detected, the machining is stopped.

In a first embodiment, a breakthrough is detected by identifying the removed material 201 to be the filling material 231. In this situation, the output signal of the analysis unit 130 corresponds to the filling material 231 and triggers the control unit 140 to stop the machining of the workpiece 210. This can be achieved by setting the operational parameters of the laser source 110 such that the intensity of the laser beam 211 is reduced to zero intensity, i.e. the laser source 110 and the laser beam 111, respectively, are deactivated. In other words, damaging of the second wall 220 of the airfoil 200 can be avoided by configuring the laser machining system 100 such that the analysis unit 130 triggers the control unit 140 to stop the machining of the workpiece 210 upon identification of the removed material 201 to be a predefined material, namely the filling material 231. Correspondingly, the data base would comprise an entry which defines the optimal operational parameters to be applied upon identification of the removed material 201 to be the filling material 231 would be a deactivation of the laser beam 111.

In this embodiment of breakthrough detection, the predefined change of removed material 201 is the change from some material of the workpiece 210 to the filling material 231. More specifically, the predefined change is the change to the filling material 231, but not to any other material.

In an alternative embodiment, breakthrough detection can be achieved by monitoring the intensity of the spectrum of the last layer of the component to be machined, i.e. the last layer of the first wall 210. Therein, the last layer of the workpiece 210 and the first wall 210, respectively, is that layer of the first wall 210 which comes last in the direction of propagation of the laser beam 111. As shown in FIG 1, the layer 213 of base material is the last layer of the first wall 210 to be machined before the laser beam 111 reaches the hollow space 230 and the filling material 231. Since the structure of the first wall 210 is well known, it is also known that the layer 213 of base material is the last layer to be machined. Therefore, the monitoring of the corresponding spectrum allows detection of a breakthrough. As soon as the intensity of the particular spectrum of the base material disappears, a breakthrough must have occurred.

In this situation, the output signal of the analysis unit 130 corresponds to the material of the layer 213 of base material as long as the breakthrough has not yet occurred. The control unit 140 interprets a change of the output signal as a breakthrough. With this change, the control unit 140 is triggered to stop the machining of the workpiece 210. Again, as described above, this can be achieved by setting the operational parameters of the laser source 110 such that the intensity of the laser beam 211 is reduced to zero intensity, i.e. the laser source 110 and the laser beam 111, respectively, are deactivated.

In other words, damaging of the second wall 220 of the airfoil 200 can be avoided by configuring the laser machining system 100 such that the analysis unit 130 triggers the control unit 140 to stop the machining of the workpiece 210 as soon as the removed material 201 is identified to be not the material of the last layer 213 of the workpiece 210 to be machined.

In this alternative embodiment of breakthrough detection, the predefined change of removed material 201 is the change from the particular material of the last layer of the workpiece 210 to be machined to any other material. More specifically, the predefined change is the change from the material of the last layer 213 of the workpiece 210 to be machined, but not from any other material.

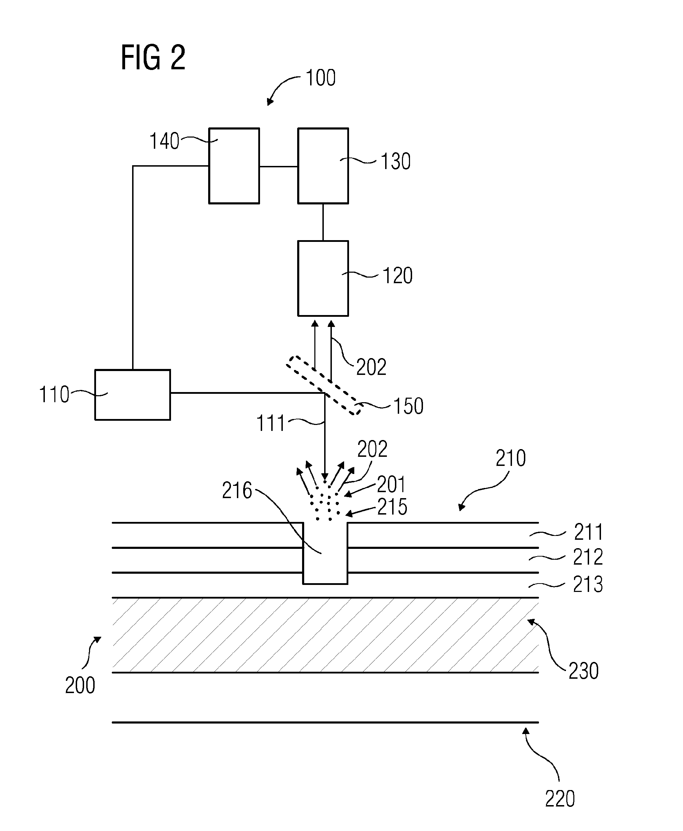

FIG 2 shows a second embodiment of the laser machining system 100. In addition to the components of the laser machining system 100 as shown in FIG 1, the system 100 comprises a dichroic element 150. The purpose and function of the laser source 110, the spectrometer unit 120, the analysis unit 130, and the control unit 140 remains unchanged and as described with reference to FIG 1. In the following, only the purpose and function of the dichroic element 150 will be described for the sake of brevity.

Compared to FIG 1, the physical arrangement of components, especially the arrangement of the laser source 110, has been modified. Actually, the physical arrangement of the analysis unit 130 and the control unit 140 is uncritical, since these units do not emit or receive light. Therefore, these units will not be discussed here.

The dichroic element 150 and the laser source 110 are arranged such that the laser beam 111 emitted from the laser source 110 during operation is reflected to the region 215. There, the laser beam 111 machines the workpiece 210 as described above to create a hole 216 or a cut (not shown).

Moreover, the dichroic element 150 is arranged in the optical path between the workpiece 210 and the region 215, respectively. Thus, the light 202 emitted by the removed material 201 passes the dichroic element 150 before it reaches the spectrometer unit 150 for further analysis and processing by means of the spectrometer unit 150, the analysis unit 130, and the control unit 140 as described above.

In a preferred embodiment which can be applied for the laser machining systems 100 as shown in FIG 1 and FIG 2, the laser source 110 generates a pulsed laser beam 111, consisting of a series of laser pulses of a typical pulse length of 1-2ms and pauses between two pulses. Temporal information about the pulse lengths and pause lengths would be included in the operational parameters of the laser source 110. For example, the temporal information would include the lengths of both the pulses and the pauses.

According to this embodiment, the removed material 210 is only analyzed during pauses in between the laser pulses. This can be achieved in the following three exemplary ways:
- The spectrometer unit 120 is configured such that it determines the spectrum S of light 202 only during pauses between laser pulses. Therewith, the spectrum would only be provided to the analysis unit 130 for the corresponding time spans, i.e. for those pauses.
- The analysis unit 130 is configured such that it conducts the spectral analysis of the spectrum of the emitted light 202 only during the pauses. In this scenario, the spectrometer unit 120 can determine and provide the spectrum continuously, but the analysis only happens for pauses between the laser pulses. Correspondingly, the output signal to the control unit 140 would only be provided for those pauses.
- The control unit 140 is configured such that the output signal from the analysis unit 130 is only considered for pauses between laser pulses. The spectrometer unit 120 and/or the analysis unit 130 can work continuously.

Whichever unit 120, 130, 140 is configured to act as described above only during pauses between the laser pulses, this unit would have to have temporal information available about the pulses and pauses of the laser beam 111. In other words, that unit would have to be synchronized with the laser source 111. Since the control unit 140 controls the laser source 110 by setting the operational parameters of the laser source 110 including the temporal information, the synchronization information can be provided by the control unit 140 to the respective unit 120, 130, 140.

It might be noted that it is not necessary to analyze the removed material 210 during each pause. It might be sufficient to conduct the analysis only during every second, third or, in general, n-th pause (with n≠1). With this, the requirements to the electronic equipment of the laser machining system 100 would be less challenging since the analysis and the processing can be slower.

According to an aspect of the invention, a method of controlling laser machining of a workpiece would be as follows:

In a first step, a laser beam is generated by a laser source to be incident on a region of the workpiece, such that the laser beam machines the workpiece in the region by removing material from the region. The laser beam comprises laser beam properties according to at least one operational parameter of the laser source. The region of the workpiece and the removed material, respectively, will emit light. The light and its spectrum, respectively, is a unique identifier of the removed material and of the material machined by the laser beam.

In a second step, a spectrum of light emitted from the removed material from the region of the workpiece is determined by a spectrometer unit. The light characterizes the removed material. The spectrum is provided from the spectrometer unit to an analysis unit.

In a third step, a spectral analysis of the spectrum of the emitted light is conducted by the analysis unit to enable identification of the removed material. Subsequently, an output signal depending on the spectral analysis is generated by the analysis unit. The output signal, being a unique identifier of the removed material, is provided to a control unit which controls the laser source based on the output signal of the analysis unit.

Upon detection of a predefined change of the removed material, a fourth step of the method is initiated in which the analysis unit generates the output signal such that it triggers the control unit to stop the machining of the workpiece.

Preferably, the laser beam is a pulsed laser beam consisting of a series of laser pulses and pauses between two pulses. The removed material is only analyzed during pauses in between the laser pulses.

In one embodiment of the method, the predefined change of removed material is the change from some material of the workpiece to the filling material, as described above. More specifically, the predefined change is the change to the filling material, but not to any other material.

In an alternative embodiment of the method, the predefined change of removed material is the change from the particular material of the last layer of the workpiece to be machined to any other material. More specifically, the predefined change is the change from the material of the last layer of the workpiece to be machined, but not from any other material.

Both embodiments have been described in more detail with reference to FIG 1.

Though the invention has been described herein with reference to specific embodiments, this description is not meant to be construed in a limiting sense. Various examples of the disclosed embodiments, as well as alternate embodiments of the invention, will become apparent to persons skilled in the art upon reference to the description of the invention. It is therefore contemplated that such modifications can be made without departing from the scope of the present invention.

## Claims

1. A control system (120, 130, 140) for a laser machining system (100) for machining of a workpiece (210), comprising:
- a spectrometer unit (120) for determining a spectrum of light (202) emitted during operation of the laser machining system (100) by a material (201) removed from a region (215) of the workpiece (210) by a laser beam (111) of a laser source (110) of the laser machining system (100),
- an analysis unit (130) for conducting a spectral analysis of the spectrum of the emitted light (202) to enable identification of the removed material (201), wherein the analysis unit (130) is configured to generate an output signal uniquely depending on the spectral analysis,
- a control unit for controlling the laser source (110) based on the output signal of the analysis unit (130), wherein
- the analysis unit (130) is moreover configured to generate the output signal such that the output signal triggers the control unit (140) to stop the machining of the workpiece (210) upon detection of a predefined change of removed material (201).

2. A control system according to claim 1,
wherein the analysis unit (130) is configured to generate the output signal such that the output signal triggers the control unit (140) to stop the machining of the workpiece (210) upon identification of the removed material (201) to be a predefined material.

3. A control system according to claim 2,
wherein the predefined material is a filling material (231) to be arranged behind the workpiece (210) in a direction of propagation of the laser beam (111).

4. A control system according to claim 3,
wherein the filling material (231) is Teflon or wax.

5. A control system according to claim 1,
wherein the workpiece (210) comprises at least one layer (213) of a known material and a known spectrum, wherein the one layer (213) is the last layer (213) of the workpiece (210) in a direction of propagation of the laser beam (111), and wherein the predefined change of removed material (201) is the change from the material of the last layer (213) of the workpiece (210) to any other material.

6. A control system according to claim 5,
wherein the predefined changed is considered to be detected upon a significant decrease of intensity of the known spectrum emitted by the known material of the last layer (213).

7. A control system according to any one of the preceding claims,
wherein the laser source (110) is configured to generate a pulsed laser beam (111) comprising a series of laser pulses, wherein the control system (120, 130, 140) is configured to conduct the spectral analysis only during beam pauses between laser pulses of the laser beam (111).

8. A control system according to claim 6,
wherein the control system is configured to conduct the spectral analysis only during every n-th beam pause, with n≠1.

9. A laser machining system (100), comprising
- a control system (120, 130, 140) according to any one of the preceding claims and
- a laser source (110) for generating the laser beam (111) to be incident on the region (215) of the workpiece (210), such that the laser beam (111) machines the workpiece (210) in the region (215) by removing the material (201) from the region (215).

10. A method for controlling machining of a workpiece with a laser machining system,
wherein the laser machining system comprises a laser source for generating a laser beam to be incident on a region of the workpiece, such that the laser beam machines the workpiece in the region by removing a material from the region,
the method comprising
- a step of determining a spectrum of light emitted from the removed material from the region of the workpiece,
- a step of conducting a spectral analysis of the spectrum of the emitted light to enable identification of the removed material,
- a step of generating an output signal uniquely depending on the spectral analysis, and
- a step of providing the output signal to a control unit for controlling the laser source based on the output signal of the analysis unit,
wherein, upon detection of a predefined change of the removed material, the output signal is generated such that it triggers the control unit to stop the machining of the workpiece.

11. A method according to claim 10,
wherein the laser beam is a pulsed laser beam consisting of a series of laser pulses and pauses between two pulses, wherein the removed material is only analyzed during pauses in between the laser pulses.

12. A method according to claim 10 or 11,
wherein the output signal is generated such that it triggers the control unit to stop the machining of the workpiece upon identification of the removed material to be a predefined material.

13. A method according to claim 12,
wherein the predefined material is a filling material to be arranged behind the workpiece in a direction of propagation of the laser beam.

14. A method according to claim 10 or 11,
wherein the workpiece comprises at least one layer of a known material and a known spectrum, wherein the one layer is the last layer of the workpiece in a direction of propagation of the laser beam, and wherein the predefined change of removed material is the change from the material of the last layer of the workpiece to any other material.

15. A control system (120, 130, 140) for a laser machining system (100) for machining of a workpiece (210), comprising:
- a spectrometer unit (120) for determining a spectrum of light (202) emitted during operation of the laser machining system (100) by a material (201) removed from a region (215) of the workpiece (210) by a pulsed laser beam (111) of a laser source (110) of the laser machining system (100),
- an analysis unit (130) for conducting a spectral analysis of the spectrum of the emitted light (202) to enable identification of the removed material (201), wherein the analysis unit (130) is configured to generate an output signal uniquely depending on the spectral analysis,
- a control unit (140) for controlling the laser source (110) based on the output signal of the analysis unit (130),
wherein
- the control system (120, 130, 140) is configured to conduct the spectral analysis only during pauses between laser pulses of the pulsed laser beam (111).
